# EUROPEAN PATENT APPLICATION

(11) **EP 2 325 140 A1**
(43) Date of publication of application: **25.05.2011**
(21) Application number: 09808335.5
(22) Date of filing: 24.08.2009
(51) Int. Cl.: C01B 33/152

(54) **SILICA NANOPARTICLE STRUCTURE AND PROCESS FOR PRODUCTION OF SAME**

(30) Priority: 22.08.2008 JP 2008213717
(71) Applicant: The University of Tokyo, Bunkyo-Ku Tokyo 113-8654 (JP)
(72) Inventor: OKUBO, Tatsuya, Tokyo 113-8654 (JP); SHIMOJIMA, Atsushi, Tokyo 113-8654 (JP); FUKAO, Masashi, Tokyo 113-8654 (JP); SUGAWARA, Ayae, Tokyo 113-8654 (JP); OU, Gunsei, Tokyo 113-8654 (JP)
(74) Representative: Moore, Graeme Patrick
(86) International application number: PCT/JP2009/064737
(87) International publication number: WO 2010/021400

(57) **Abstract**

It is an object of the present invention to provide a silica nanoparticle structure and a process for producing the same, which allow silica nanoparticles to be order-controlled to thereby make it possible to extend the application field of the silica nanoparticles ever more markedly. Silica nanoparticle structure components 2 can be prepared in which the silica nanoparticles 3 conventionally staying dispersed in a colloid solution can be converted into one-dimensionally ordered ones, and then adjacent silica nanoparticles are so firmly coupled as to be unable to disperse even if external force is applied thereto. Thus, the silica nanoparticles 3 become available for a variety of applications with the silica nanoparticles 3, conventionally staying dispersed in a colloid solution, order-controlled. Hence, the silica nanoparticle structure 1 can be provided which can extend the application field of the silica nanoparticles 3 still more markedly.

## Description

### TECHNICAL FIELD

The present invention relates to a silica nanoparticle structure and a process for producing the same, which are suitably applicable, e.g., when the order control of silica nanoparticles is intended.

### BACKGROUND ART

As a synthesis technique of high-monodispersed and submicron-order silica nanoparticles, knowledge of the Stober method is widespread (refer to nonpatent document 1). The Stober method enables spherical silica nanoparticles to be obtained by means of hydrolysis, condensation polymerization of tetraethoxysilane (hereunder, called TEOS), acting as a source of silica, in the presence of an ammonia catalyst in a water and ethanol solvent.

The foregoing silica nanoparticles are in such a high industrial demand that they are employed in a variety of ways such as for use as a catalyst carrier, an absorbent, a coating agent, a cosmetic product or the like. Also in the nanotechnology domain which has attracted attention in recent years, such nanoparticles have been utilized as an abrasive compound for semiconductor and an insulation film for a liquid display, thus leading to their remarkably extensive applications.

Non patent document: W. Stober et al., J. Colloid Interface Sci., 26. 62-69 (1968)

### DISCLOSURE OF THE INVENTION

### Problem to be solved by the Invention

These applications, however, utilize the rigidity, dispersibility and interface characteristic of the silica nanoparticles, where they are simply utilized by modifying and processing their single particle, aggregate, a colloid solution of the silica nanoparticle. On the other hand, through the studies being conducted in late years for synthesizing the silica nanoparticles, the high monodispersibility and nano-level particle diameter control have become possible and therefore it is expected as a technique for developing a novel function to create a high-order structure with an individual particle utilized as a building unit of the structure. As an outstanding example, there is a certain structure called a colloid crystal in which the silica nanoparticles form a packed structure. Researches are actively being done which aim at developing a photonic crystal or the like that utilizes nano-sized gaps existing between silica nanoparticles and periodically arranged in the silica nanoparticles. Under the present situation, however, no method has been established yet which allows the silica nanoparticles to be order-controlled so as to realize a designed structure in diverse dimensions and scales.

The present invention has been made with the view of solving the above problem. Therefore, it is an object of the present invention to provide a silica nanoparticle structure and a process for producing the same, by which the silica nanoparticles are allowed to be order-controlled to enable the application field of the silica nanoparticles to be extended ever more markedly.

### Means for solving the Problem

A first aspect of the present invention is a silica nanoparticle structure comprising silica nanoparticle structural components in which a plurality of silica nanoparticles are one-dimensionally coupled together.

A second aspect of the present invention is a silica nanoparticle structure in which the silica nanoparticle structural components are prepared by solving one-dimensional structure forming substances with one-dimensional structure forming capability in a solution containing the silica nanoparticles and regulating a pH of the solution using a pH adjuster.

A third aspect of the present invention is a silica nanoparticle structure in which the one-dimensional structure forming substance comprises a block copolymer and/or TEOS (tetraethoxysilane).

A fourth aspect of the present invention is a silica nanoparticle structure in which the silica nanoparticles are comprised of first silica nanoparticles with a given particle diameter and second silica nanoparticles with a particle diameter different from a diameter of the first silica nanoparticles and the silica nanoparticle structural components are comprised of the first silica nanoparticles and the second silica nanoparticles which are mixed together and are one-dimensionally ordered to be coupled together.

A fifth aspect of the present invention is a silica nanoparticle structure in which the silica nanoparticles are comprised of first silica nanoparticles with a given particle diameter and second silica nanoparticles with a particle diameter different from a diameter of the first silica nanoparticles. The silica nanoparticle structural components are comprised of first silica nanoparticles structural components in which the first silica nanoparticles are one-dimensionally ordered to be coupled together and second silica nanoparticle structural components in which the second silica nanoparticles are one-dimensionally ordered to be coupled together.

A sixth aspect of the present invention is a process for producing a silica nanoparticle structure, which comprises a solving step of preparing a reaction solution by solving the one-dimensional structure forming material with the one-dimensional structure forming capability in a solution containing the silica nanoparticles, and a coupling step of one-dimensionally coupling the silica nanoparticles by adding the pH adjuster to the reaction solution to regulate the pH of the reaction solution.

A seventh aspect of the present invention is a process for producing the silica nanoparticle structure in which in the solving step, the one-dimensional structure forming material is the block copolymer or TEOS (tetraethoxysilane).

A eighth aspect of the present invention is a process for producing silica nanoparticle structure in which the solution in the solving step is prepared by mixing a first solution containing, as the silica nanoparticle, first silica nanoparticles with a given particle diameter and a second solution containing, as the silica nanoparticle, second silica nanoparticles with a particle diameter different from a diameter of the first silica nanoparticles.

A ninth aspect of the present invention is a process for producing the silica nanoparticle structure in which the solution in the solving step is comprised of a first solution containing first silica nanoparticles with a given particle diameter as the silica nanoparticle and a second solution containing second silica nanoparticles with a particle diameter different from a diameter of the first silica nanoparticles as the silica nanoparticle, and in the solving step, a first reaction solution in which the block copolymer is solved in the first solution and a second reaction solution in which the block copolymer is solved in the second solution are prepared, and in the coupling step, by adding the pH adjuster to the first reaction solution to adjust the pH of the first reaction solution, the first silica nanoparticles are coupled together with the first nanoparticles one-dimensionally ordered and besides by also adding the pH adjuster to the second reaction solution to adjust the pH of the second reaction solution, the second silica nanoparticles are coupled together with the second nanoparticles one-dimensionally ordered, and after the coupling step, there is provided a mixing step of mixing first silica nanoparticle structural components in which the first silica nanoparticles are one-dimensionally ordered to be coupled together and second silica nanoparticle structural components in which the second silica nanoparticles are one-dimensionally ordered to be coupled together.

A tenth aspect of the present invention is a process for producing the silica nanoparticle structure in which in the coupling step, the pH is not less than 4 and below 8.

A eleventh aspect of the present invention is a process for producing the silica nanoparticle structure, further comprising an aging step of aging the reaction solution after adjusting the pH of the reaction solution.

### Effects of the Invention

According to the silica nanoparticle structure in the first aspect of the present invention, the silica nanoparticles become available for a variety of applications with the silica nanoparticles order-controlled. Hence, the silica nanoparticle structure can be provided which can ever more markedly extend the application field of the silica nanoparticle.

According to the process for producing the silica nanoparticle structure in the sixth aspect of the present invention, the silica nanoparticles staying dispersed in the solution can be converted into one-dimensionally ordered ones, so that adjacent silica nanoparticles are coupled, thus permitting the silica nanoparticle structural components to be prepared. Hence, the silica nanoparticle structure can be provided which can extend the application field of the silica nanoparticles ever more markedly.

### BRIE DESCRIPTION OF THE DRAWINGS

FIG. 1 is an SEM image illustrating an overall architecture of a silica nanoparticle structure according to the present invention.
FIG. 2 is a flow chart illustrating a verification procedure of the silica nanoparticle structure according to the present invention.
FIG. 3 is a schematic view illustrating a chemical formula of F 127.
FIG. 4 shows SEM images illustrating the silica nanoparticle structure produced.
FIG. 5 is an SEM image at the time of applying a vacuum-freeze drying process to the silica nanoparticle structure.
FIG. 6 shows SEM images when the reaction solution is 8, 7.5 and 7 in pH.
FIG. 7 shows SEM images when the reaction solution is 6.5 and 6 in pH.
FIG. 8 shows SEM images when a reaction temperature .is at 40, 60 and 80°C.
FIG. 9 shows SEM images when an aging time period is one and seven days.
FIG. 10 shows SEM images when an additive amount of F 127 is changed.
FIG. 11 shows SEM images illustrating the silica nanoparticle structures produced using a reaction solution not subjected to ultrasonic irradiation and using that subjected to the same.
FIG. 12 shows SEM images illustrating the silica nanoparticle structure produced using a reaction solution agitated at the time of aging.
FIG. 13 is a flow chart illustrating a production procedure of large-diameter silica nanoparticles.
FIG. 14 is an SEM image illustrating the overall architecture of the silica nanoparticle structure produced using large-diameter silica nanoparticles.
FIG. 15 is a flow chart illustrating a verification procedure (1) of the silica nanoparticle structure produced according to another embodiment.
FIG. 16 is an SEM image illustrating the overall architecture of the silica nanoparticle structure produced according to the flow chart shown in FIG. 15.
FIG. 17 is a flow chart illustrating a verification procedure (2) of the silica nanoparticle structure produced according to another embodiment.
FIG. 18 is an SEM image illustrating the overall architecture of the silica nanoparticle structure produced according to the flow chart shown in FIG. 17.
FIG. 19 is an SEM image illustrating the overall architecture of the silica nanoparticle structure produced using arginine.
FIG. 20 is an SEM image illustrating the overall architecture of the silica nanoparticle structure produced using histidine.
FIG. 21 is a flow chart illustrating a production procedure of the silica nanoparticle structure produced according to another embodiment.
FIG. 22 shows SEM and TEM images illustrating the overall architecture of the silica nanoparticle structure produced according to the flow chart shown in FIG. 21.
FIG. 23 is a graph illustrating a relationship between concentration conditions of arginine and ethanol and shapes of the particles under the conditions.
FIG. 24 shows a table expressing concentration conditions of arginine and ethanol and SEM images illustrating the silica nanoparticle structural components prepared under the conditions.
FIG. 25 shows a table expressing concentration conditions of tert-butanol and SEM images illustrating the silica nanoparticle structural components prepared under the conditions.

### DESCRIPTION OF NUMERAL SYMBOLS

1, 12, 16, 20, 31, 41, 51 silica nanoparticle structure
2, 17, 33, 43, 52 silica nanoparticle structural components
10 large-diameter silica nanoparticles (second silica nanoparticles)
11 large-diameter silica nanoparticle structural components (second silica nanoparticle structural components)
15 small-diameter silica nanoparticles (first silica nanoparticles)
21 small-diameter silica nanoparticle structural components (first silica nanoparticle structural components)

### BEST MODE FOR CARRYING OUT THE INVENTION

Hereunder is a description of embodiments according to the present invention based on the accompanying drawings.

### (1) Overall Architecture of a Silica Nanoparticle Structure

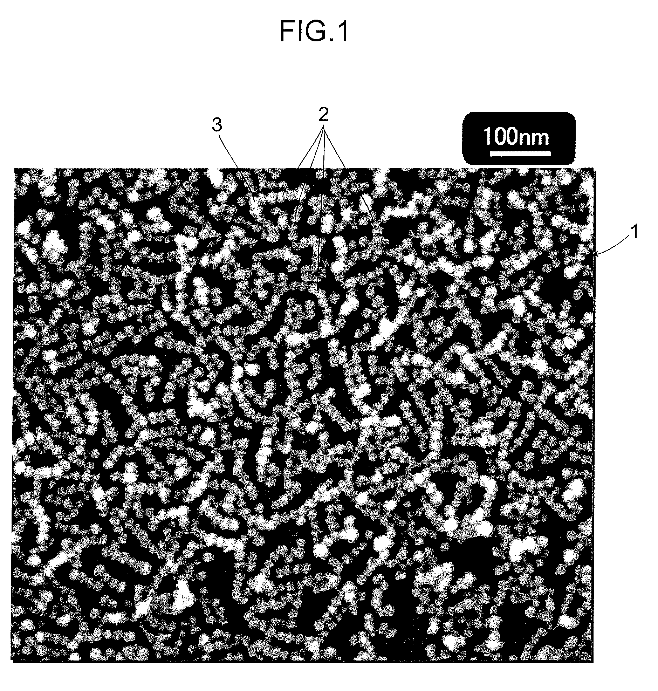

FIG. 1 is an SEM (Scanning Electron Microscope) image obtained by photographing a silica nanoparticle structure 1 according to the present invention using a scanning electron microscope. As shown in FIG.1, the silica nanoparticle structure 1 is made up of a plurality of silica nanoparticle structural components 2. In each of the silica nanoparticle structural component 2, a plurality of silica nanoparticles 3 are linearly or curvedly ordered in a ball-chain-shaped manner (hereunder, this order is referred to as a one-dimensional order) and the adjacent silica nanoparticles 3 are coupled together.

The silica nanoparticle structural components 2 are anisotropic in the order conditions of the silica nanoparticles 3. By a pH change in a solution in the production course, the order conditions of the silica nanoparticles 3 vary. When the pH is not less than 4 and below 8, the silica nanoparticles 3 are allowed to be coupled together with the silica nanoparticles 3 one-dimensionally ordered. Specifically, when the pH is below 4, deposits of uncontrolled aggregates are yielded for the silica nanoparticles 3 to become no one-dimensional order, while when the pH is not less than 8, the silica nanoparticles 3 are dispersed to get into no one-dimensional order. Hence, the pH is desirably not less than 4 and below 8, In addition, e.g., even when the pH is decreased, the silica nanoparticles 3 can be coupled in a one-dimensionally ordered state by changing the additive amounts (described below) of compounds, used in the process of preparing the silica nanoparticle structural components 2, e.g., lysine and a block copolymer.

Practically, these silica nanoparticles 3 are spherical and are controlled in particle diameter to a diameter on the order of 10nm to 2µm. Then, the silica nanoparticles 3 form the silica nanoparticle structural components 2 in terms of a few to dozens of the silica nanoparticles 3. The silica nanoparticle structural components 2 are so firmly coupled together as to be unable to disperse even if an ultrasound or the like is externally applied thereto.

### (2) Process for producing the Silica Nanoparticle Structure

The silica nanoparticle structure 1 thus structured can be produced by the following procedure. Here, after firstly describing the production process of the silica nanoparticles 3, the procedure for producing the silica nanoparticle structure 1 using the silica nanoparticles 3 is described in series.

### (2-1) Procedure for producing the Silica Nanoparticles

As a synthesis method using basic amino acid, firstly, a water solution in which basic amino acid is solved in water is prepared. Here, as basic amino acid, any amino acid from among natural amino acid and nonnatural amino acid, may be applicable. The amino acid containing a carboxyl radical or a basic substituent in its molecules may be applicable. Here, as a basic substituent, an amino radical, a substituted amino radical, an imino radical or the like are considered. As a desirable basic amino acid, α-amino acid is recommended whose position of α is substituted by one or two, desirably one straight-chain or branched-chain aliphatic hydrocarbon radical which is saturated or unsaturated and has one or more basic substituents such as an amino acid radical, a substituted amino radical, an imino radical or the like and further has a carbon number of 1 to 10, desirably a 3 to 6 carbon number.

Here, as a basic substituent, e.g., an amino radical, monoalkyl amino radical, a dialkyl amino radical, an imino radical or the like are recommended. Here, as a monoalkyl amino radical, e.g., a methyl amino radical, an ethyl amino radical or the like are recommended, while as a dialkyl amino radical, e.g., a dimethyl amino radical, diethyl amino radical or the like are recommended. Further, as an imino radical, e.g., an amidino radical, a guanidino radical or the like are recommended. As a alkyl radical acting as a substituent, a straight-chain or branched-chain aliphatic hydrocarbon radical with a carbon number of 1 to 10, desirably 1 to 6, desirably an alkyl radical is recommended and further desirably a methyl radical, an ethyl radical, an n-propyl radical, an n-butyl radical, an n-pentyl radical, an n-hexyl radical, an isopropyl radical, an isobutyl radical, a sec-butyl radical, a cychropentyl radical, a cychrohexyl radical or the like are recommended.

As a basic substituent, a cyclic amino radical and a cyclic imino radical such as a pyrrolidinyl radical, a piperidinyl radical, a morpholino radical, a piperazinyl radical, a homopiperazinyl radical, a pyrydyl radical, an imidazolyl radical or the like may be applicable. Desirably, however, the chain-like amino and imino radicals are recommended. Furthermore, as a saturated or unsaturated aliphatic hydrocarbon radical which has a carbon number of 1 to 10, desirably 3 to 6 and is straight-chain or branched-chain, an alkyl radical, an alkenyl radical or the like are recommended. Desirably, however, a straight-chain alkyl radical such as a methyl radical, an ethyl radical, an n-propyl radical, an n-butyl radical, an n-pentyl radical, an n-hexyl radical, more desirably, such as an n-propyl radical, an n-butyl radical or the like is recommended.

As a desirable basic amino acid, α-amino acid is recommended whose position of α is substituted by an ethyl radical with an amino radical or a guanidine radical, an n-propyl radical, an n-butyl radical or the like. Specifically, as this type of amino acid, e.g., lysine, arginine, histidine or the like is recommended. As the basic amino acid like this, an optical active substance or a racemic substance may be applicable. As being easily obtainable, however, a commercially available optically-active basic amino acid is desirable. The water solution of the basic amino acid like this can be used in the wide range of the content of basic amino acid, that is, the concentration of 0.1 to 20 % by mass, desirably 0.5 to 10 % by mass.

Then, alkoxysilane is added to the water solution, in which basic amino acid like this is solved, to cause both the substances to react at 40 to 100°C, desirably 50 to 100°C, thereby preparing a colloid solution in which the silica nanoparticles 3 have been created. Here, the reaction time is on the order of 10 to 80 hours, desirably 20 to 80 hours and normally on the order of 30 to 50 hours. In this case, for the first 10 to 20 hours, the solution is desirably agitated by a propeller, a stirrer, etc. in order to hold the uniformity of the mixture at a comparatively low temperature, e.g., 40 to 80°C, desirably on the order of 50 to 60°C. Besides, to complete the reaction, the solution is desirably allowed to remain stationary for 5 hours or more, desirably 10 hours or more at a high temperature (e.g., 70 to 100°C, desirably 80 to 100°C). In addition, as the quantity of the basic amino acid used in relation to the quantity of the alkoxysilane, 0.01 to 1.0, desirably 0.015 to 0.5 is recommended to 1 mol of alkoxysilane. The quantity is, however, not limited to these values.

Here, no restrictions are particularly imposed upon the alkoxysilane if it is hydrolyzed by the water solution of basic amino acid to permit silica to form. As a desirable alkoxysilane, there exists one with an alkoxy radical composed of a straight-chin or branched-chain alkyl radical having a carbon number of 1 to 15, desirably 1 to 10, more desirably 1 to 6. The four alkoxy radicals of the alkoxysilane may be different from one another or the same. Desirably, however, the tetraalkoxysilane with the same alkoxy radicals is recommended. As a desirable alkoxy radical, a methoxy radical, an ethoxy radical, an n-propoxy radical or the like are recommended but the alkoxy radical is not limited to these radicals. As a desirable alkoxysilane, tetramethoxysilane, tetraethoxysilane (TEOS) or the like are recommended.

### (2-2) Other Production Procedure of the Silica Nanoparticles

As a production procedure of silica nanoparticles, not limited to the foregoing embodiment, other embodiment may be employed. As other embodiment, e.g., a water solution prepared by solving an organic base such as plopylamine or the like therein may be employed instead of the water solution prepared by solving basic amino acid containing the foregoing lysine therein. Even in this case, the silica nanoparticles 3 with comparable diameters can be produced.

Further, as an embodiment other than the above embodiment, a mixed solution containing ethanol, water and ammonia is prepared, and by adding TEOS to the mixed solution to allow the reaction with one another at room temperature, spherical silica nanoparticles 3 can be produced. In addition, in this case, by varying the additive amount of the TEOS, the shape of each of the silica nanoparticles 3 can be controlled in the range of 50nm to 2µm in particle diameter.

### (2-3) Production Procedure of the Silica Nanoparticle Structure

Next, a description is given as below with respect to the production procedure for producing the silica nanoparticle structure 1 using the silica nanoparticles 3 created according to the foregoing production procedure. In this case, the block copolymer is added to a colloid solution, the solution obtained by the foregoing production procedure, to be solved therein, thereby preparing a reaction solution. In this case, with the reaction temperature maintained at a given temperature of 40 to 80°C, the block copolymer may be solved into the colloid solution by agitating the solution for a given period of time. In addition, when the reaction temperature is set at 80°C, a gelled reaction solution can be prepared.

The additive amount of the block copolymer is desirably such that when silica (SiO₂) : the block copolymer=1: x (w : w (mass ratio)) is set based on the quantity of silica in the colloid solution, x is desirably 0.5 or more. Specifically, when x is below 0.5, deposits or gels which are not one-dimensionally ordered are created and therefore x is desirably 0.5 or more.

Here, the block copolymer means a molecule in which polymers possessed of different properties are chemically coupled. Specifically, as the block copolymer, triblock copolymer expressed by R₁O-(R₂O)ₛ- (R₃O)ₜ-(R₄O)ᵤ-R₅ and dibolck copolymer expressed by R₁O- (R₂O)ₛ-(R₄O)ᵤ-R₅ are applicable, where R₁ and R₅ express H or a lower alkylene radical with a carbon number of 1 to 6, R₂, R₃ and R₄ express a lower alkylene radical with a carbon number of 2 to 6, and s, t and u express numerals 2 to 200. In addition, the block copolymer like this is marketed, as, e.g., the pluronic series from BASF Ltd.

Besides, as other block copolymer, such a block copolymer is applicable that the hydrophilic block is comprised of polyethylene oxide (hereunder, referred to as PEO) and the hydrophobic block is comprised of polystyrene (hereunder, referred to as PS) or polyisoprene (hereunder, referred to as PI). In this case, there exist triblock copolymer composed of PEO-PS (or PI)-PEO and diblock copolymer composed of PEO-PS (or PI). The PEO block is expressed by 2 to 200 in polymerization degree, while the PS (or PI) block is expressed by 2 to 50 in polymerization degree.

After that, by adding hydrochloric acid (HCl) to a reaction solution where the block copolymer has been solved in a colloid solution, the pH is controlled to a value that is not less than 4 and below 8. Then, in order to accelerate the self-assemblies of the block copolymer and silica nanoparticles, an aging operation is performed for allowing the reaction solution to remain stationary at a given reaction temperature for a certain time (hereunder, referred to as aging time). As a result, the silica nanoparticle structural components 2 can be prepared in which a few to dozens of silica nanoparticles 3 are coupled in a one-dimensionally ordered state. In addition, with the passage of the aging time, in the reaction solution, the white turbidity makes progress to permit the viscosity of the reaction solution to be increased. Here, the relationship between parameters at the time of producing the silica nanoparticle structure 1 composed of a plurality of the silica nanoparticle structural components 2 and the predominant factors of the parameters is shown in the following table 1.

**Table 1**

| Parameter | Predominant Factor |
|---|---|
| Solution pH | Micelle shape, Interaction with silicate types, Polymerization |
| Reaction temperature | between particles |
| Aging time | Micelle shape, Polymerization rate |
| F127 additive | Progression of order |
| amount | Micelle shape |
| Particle diameter | Function as a building unit, Particle surface area |

As shown in table 1, when a solution pH indicating the pH of the reaction solution is controlled, the micelle shape, the interaction with silicate types, and the polymerization between the silica nanoparticles 3 (interparticle polymerization) can be controlled. Besides, when regulating the reaction temperature, the micelle shape and the polymerization rate of the silica nanoparticles 3 can be controlled, while when regulating the aging time, the progress of the order of the silica nanoparticles 3 can be controlled. Further, when the additive amount of F127 indicating the additive amount at the time of employing, e.g., F127 as a block copolymer is controlled, the micelle shape can be controlled, while when regulating the particle diameters of the silica nanoparticles 3, the function of the silica nanoparticles 3 as a building unit and the surface area of the silica nanoparticles 3 (a particle surface area) can be controlled. Accordingly, in the silica nanoparticle structure 1, by appropriately regulating these parameters in its production process, the silica nanoparticle structural components 2 can be prepared in which the silica nanoparticles 3 with a given shape have been controlled into a desired order state.

### (3) Behavior and Effects

In the structure described above, by adding the block copolymer to the colloid solution containing the silica nanoparticles 3 and besides regulating the pH to a given value, the silica nanoparticle structural components 2 can be prepared in which the silica nanoparticles 3 staying dispersed in the colloid solution are allowed to be converted into one-dimensionally ordered ones, and then the silica nanoparticles 3 are so firmly coupled as to be unable to disperse even if an external force is applied thereto. Thus, the silica nanoparticles 3 become available for a variety of applications with the silica nanoparticles 3, conventionally staying dispersed in a colloid solution, order-controlled. Hence, the silica nanoparticle structure 1 can be provided which is capable of extending the application field of the silica nanoparticles 3 ever more markedly.

Further, in the production process of this silica nanoparticle structure 1, by regulating the pH to 6 to 6.5, the silica nanoparticles 3 are allowed to be one-dimensionally ordered in 1.5 to 2 pieces of chain and can be coupled together as they are. Furthermore, in the production process of the silica nanoparticle structure 1, by regulating the pH to 7 to 7.5, the silica nanoparticles 3 can be coupled together with the silica nanoparticles 3 one-dimensionally ordered in one chain. In this fashion, by regulating the pH in the production process of the silica nanoparticle structure 1, the silica nanoparticles 3 can be varied in one-dimensionally ordered state.

Moreover, in the production process of the silica nanoparticle structure 1, by prolonging its aging time, with the passage of the aging time still more silica nanoparticles 3 are coupled in a one-dimensionally ordered state. Hence, the silica nanoparticle structural components 2 themselves can be extended in length.

Further, in the silica nanoparticle structure 1 like this, by controlling the silica nanoparticles 3 in degree of density, the permittivity and refractive index thereof can be easily controlled and besides aerogel, being a substance with a low degree of density, can be easily produced.

### Embodiments

### (4) Producing of Silica Nanoparticle Structure.

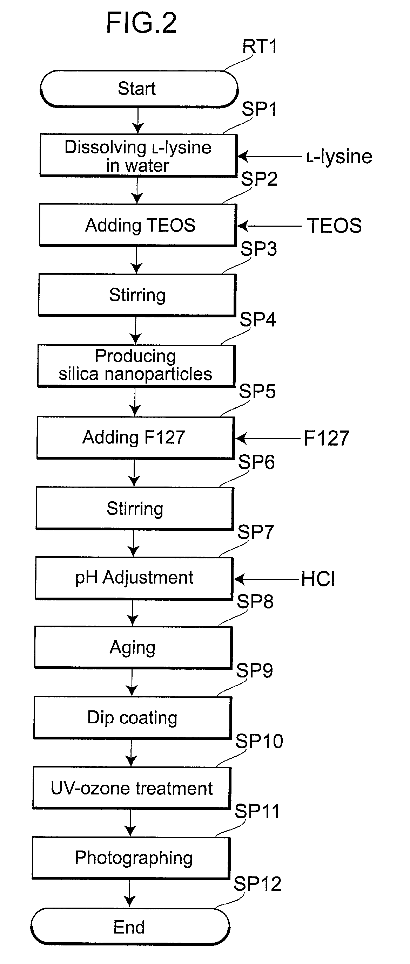

Next, verification was made on how the aforementioned silica nanoparticle structure 1 is produced. FIG.2 is a flow chart showing verification procedures of the silica nanoparticle structure 1, beginning with a starting step RT 1 and then moving to a step SP1, in which a water solution was prepared by adding lysine ("_{L}-lysine" in FIG.2) acting as a basic amino acid to water (H₂O).

Next, TEOS was added to the water solution thus obtained, followed by stirring the solution for 24 hours in a water bath of 60°C and at a revolution speed of 500 rpm, thereby obtaining a colloid solution (step SP3). Here, a molar ratio between raw materials was set to 1 (TEOS) : 154.4 (H₂O) : 0.02 (_{L}-lysine). In this way, silica nanoparticles 3 having a particle diameter of approximately 15 nm were produced in the colloid solution (step SP 4).

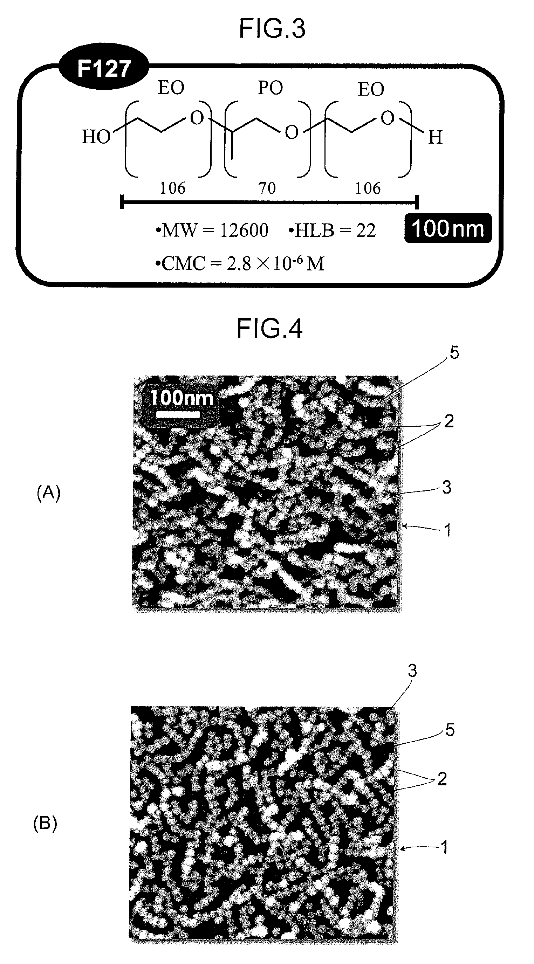

Next, F127 acting as a block copolymer as shown in FIG.3 was added to the colloid solution thus prepared (step SP5), followed by stirring the solution for 24 hours under a reaction temperature T of 60°C so as to completely dissolve F127 in the colloid solution, thereby obtaining a reaction solution. Here, in FIG.3, MW represents molar weight, HLB (Hydrophilic-Lipophilic Balance) represents a (property) characteristic of a surfactant, and CMC (critical micelle concentration) represents critical micelle concentration. Further, the additive amount of F127 was decided on the basis of the amount of silica (SiO₂) in the colloid solution, and the ratio between SiO₂ and F127 was SiO₂ F127=1 : 1 (W : W).

Specifically, the quantities of water (H₂O), lysine, TEOS and F127 according to the present embodiment are shown in a following table 2.

**[Table 2]**

| Reagent | H₂O | lysine | TEOS | F127 |
|---|---|---|---|---|
| Quantity (g) | 417 | 0.438 | 31.26 | 9.01 |
| (mol) | 23.17 | 3.00E-3 | 0.150 | 7.15E-4 |
| SiO₂ yield (g) | 9.01 | | | |

| | | | | |
|---|---|---|---|---|
| H₂O/Lysine = 50 (mol/mol) Lysine/F127 = 4.19 (mol/mol) | | | | |

Here, in the table 2, "E-3" denotes 10⁻³, and "E-4" denotes 10⁻⁴.

Subsequently, hydrochloric acid was used to adjust the pH of the reaction solution to 7 (step SP7), followed by aging such reaction solution for three days under the reaction temperature T of 60°C while allowing the solution to stand still (step SP8).

Next, in order to verify the reaction solution, particles in the reaction solution were adhered to an Si substrate via dip coating (step SP9), followed by performing UV-ozone treatment (ultraviolet wavelength 172 nm, pressure 50 Pa, irradiation time 30 min) thereon so as to remove organic elements therefrom (step SP10). Next, the Si substrate to which the silica nanoparticles in the reaction solution had been adhered was photographed using a scanning electron microscope, thereby obtaining an SEM image thereof (step SP11), and thus completing the verification procedures of the silica nanoparticle structure (step SP12).

The SEM image thus obtained is shown in FIG.4 (A). As shown in FIG.4 (A), a large number of the silica nanoparticles 3 were stacked in layers on a Si substrate 5. Specifically, there were confirmed silica nanoparticle structural components 2 in which a few or tens of the silica nanoparticles 3 were ordered one-dimensionally and connected to each other.

Next, the reaction solution obtained after aging at the step SP8 was diluted with distilled water by four times, followed by performing dip coating (step SP9), thereby reducing the densities of the silica nanoparticle structural components 2 adhered to the Si substrate, and thus making it easier to observe the order configuration of the silica nanoparticles 3. An SEM image obtained under such a condition is shown in FIG.4 (B). As shown in FIG.4 (B), there were also confirmed a plurality of silica nanoparticle structural components 2 in which several or tens of silica nanoparticles 3 were ordered one-dimensionally and connected to each other.

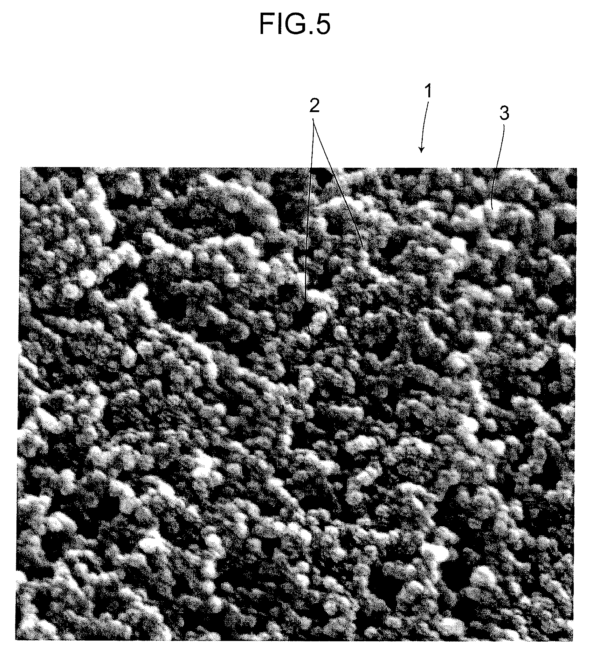

Here, FIG.5 is an SEM image showing a silica nanoparticle structure 1 subjected to vacuum freeze drying, said silica nanoparticle structure 1 prior to vacuum freeze drying being produced under a condition in which the ratio between SiO₂ and F127 was SiO₂ : F127=1 : 1, the reaction temperature T at the step SP6 and the step SP8 was 60°C, the pH of the reaction solution at the step SP7 was 7, and the aging time was 5 days. As shown in FIG.5, there were prepared the silica nanoparticle structural components 2 in which a plurality of the silica nanoparticles 3 were ordered one-dimensionally and connected to each other, and the silica nanoparticle structure 1 in which a plurality of the silica nanoparticle structural components 2 were stacked in layers.

### (5) Dependencies on various Parameters

### (5-1) Solution pH

Next, the verification procedures of the silica nanoparticle structure 1 as shown in FIG.2 were carried out under a condition in which the additive amount of F 127 was based on the ratio SiO₂ : F127=1 : 1, the reaction temperature T at the step SP6 and the step SP8 was 60°C, and the aging time at the step SP 8 was 5 days. Further, under such a condition, there were prepared five kinds of reaction solutions whose pHs had been adjusted to 8, 7.5, 7, 6.5 and 6, respectively, at the step SP7. The silica nanoparticles 3 in each solution were then adhered to the Si substrate 5 via dip coating (step SP9), followed by performing UV-ozone treatment thereon (step SP10). Each Si substrate 5 to which the silica nanoparticles 3 in each reaction solution had been adhered was then photographed using the scanning electron microscope (step SP11), followed by verifying a series of SEM images thus obtained.

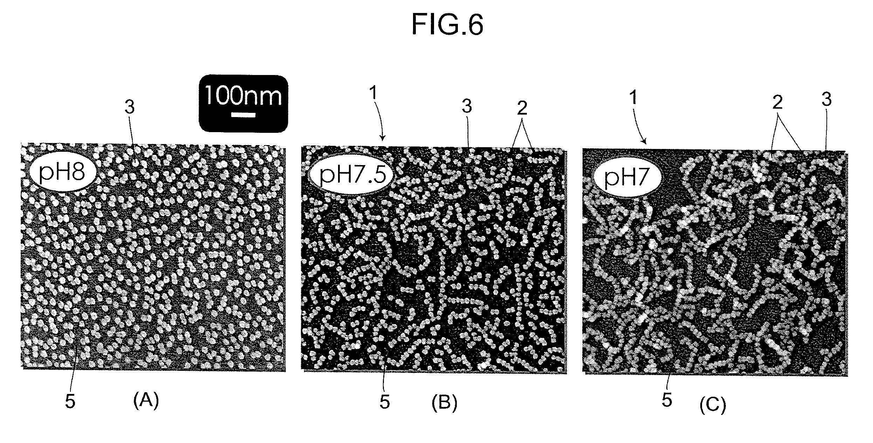

As shown in FIG.6 (A), when the pH of the reaction solution was 8, it was confirmed that the silica nanoparticles 3 were dispersed and the silica nanoparticle structural components 2 had not been prepared. However, as shown in FIG.6 (B) or (C), when the pH of the reaction solution was 7.5 or 7, it was confirmed that there were prepared the silica nanoparticle structural components 2 in which the silica nanoparticles 3 were one-dimensionally ordered in a chain and connected to each other.

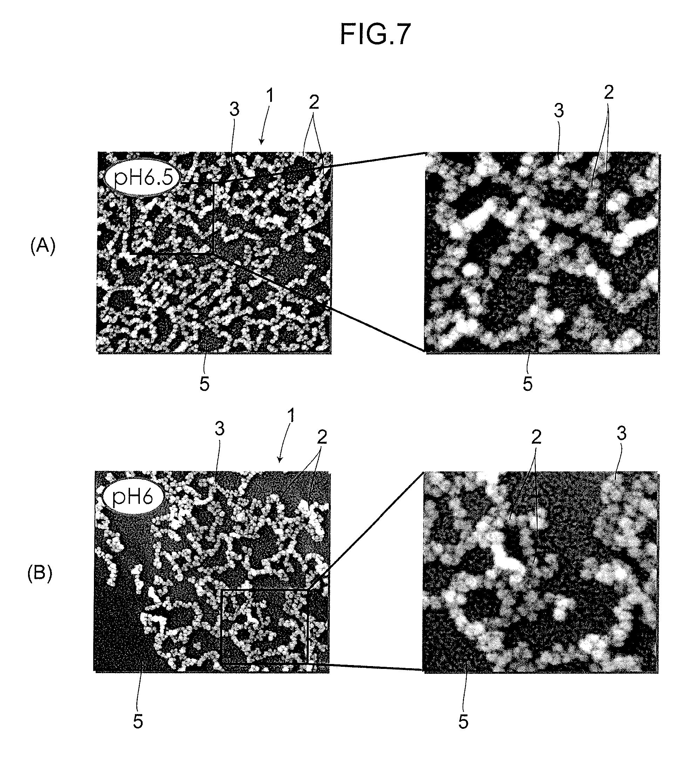

Further, as shown in FIG.7 (A) or (B), when the pH of the reaction solution was 6.5 or 6, it was confirmed that there were prepared the silica nanoparticle structural components 2 in which the silica nanoparticles 3 were one-dimensionally ordered in 1.5 to 2 chains and connected to each other.

### (5-2) Reaction Temperature

Next, the verification procedures of the silica nanoparticle structure 1 as shown in FIG.2 were carried out under a condition in which the additive amount of F127 was based on the ratio SiO₂ : F127=1 : 1, the pH of the reaction solution at the step SP7 was 7, and the aging time at the step SP8 was seven days. Further, under such a condition, there were prepared three kinds of reaction solutions whose reaction temperatures T at the step SP6 and the step SP8 were 40°C, 60°C and 80°C, respectively. The silica nanoparticles 3 in each solution were then adhered to the Si substrate 5 via dip coating (step SP9), followed by performing UV-ozone treatment thereon (step SP10). Each Si substrate 5 to which the silica nanoparticles 3 in each reaction solution had been adhered was photographed using the scanning electron microscope (step SP11), followed by verifying a series of SEM images thus obtained.

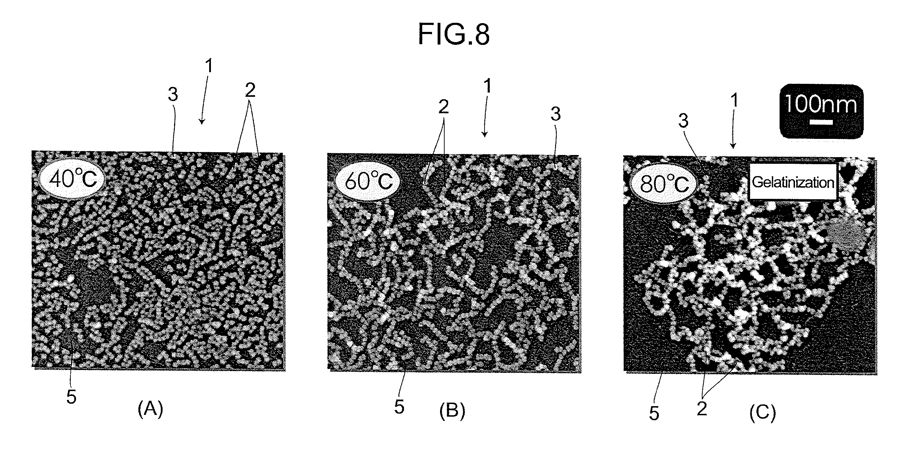

FIG.8 (A) is an SEM image showing a result when a reaction solution with a reaction temperature T of 40°C was used, and FIG.8 (B) is an SEM image showing a result when a reaction solution with a reaction temperature T of 60°C was used. Further, FIG.8 (C) is an SEM image showing a result when a reaction solution with a reaction temperature T of 80°C was used. As shown in FIG.8 (A) through (C), it was confirmed that there were prepared the silica nanoparticle structural components 2 in which the silica nanoparticles 3 were one-dimensionally ordered in a chain and connected to each other. Further, it was confirmed that the higher the reaction temperature T was, the longer the lengths of the silica nanoparticle structural components 2 became in a gradual manner, thereby facilitating networking thereof. In addition, when the reaction temperature T was 80°C, it was confirmed that the reaction solution had gelated during the aging time. In this sense, the reaction temperature T is preferably rendered to 80°C or higher when desiring to use a gelated reaction solution.

### (5-3) Aging Time

Next, the verification procedures of the silica nanoparticle structure 1 as shown in FIG.2 were carried out under a condition in which the additive amount of F127 was based on the ratio SiO₂ : F127=1 : 1, the reaction temperature T at the step SP6 and the step SP8 was 60°C, and the pH of the reaction solution at the step SP7 was 7.5. Further, under such a condition, there were prepared two kinds of reaction solutions whose aging times at the step SP8 were one day and seven days, respectively. The silica nanoparticles 3 in each solution were then adhered to the Si substrate 5 via dip coating (step SP9), followed by performing UV-ozone treatment thereon (step SP10). Each Si substrate 5 to which the silica nanoparticles 3 in each reaction solution had been adhered was photographed using the scanning electron microscope (step SP11), followed by verifying a series of SEM images thus obtained.

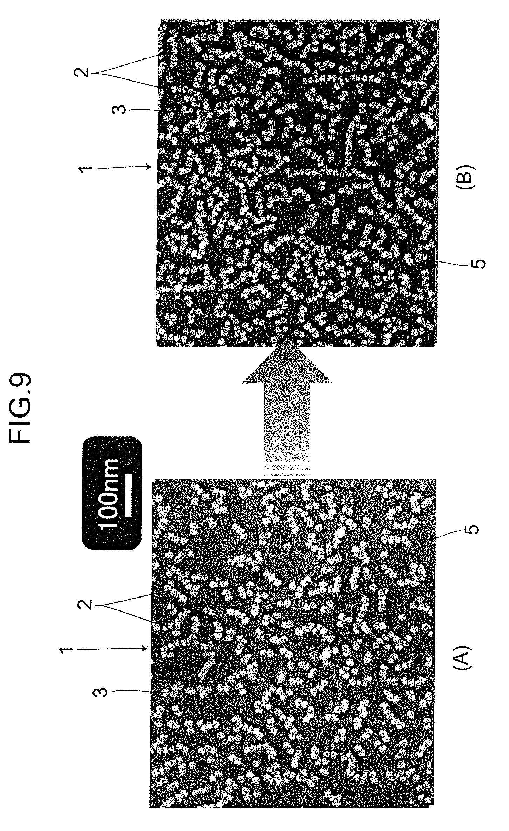

FIG.9 (A) is an SEM image showing a result when the aging time of the reaction solution was one day, and FIG.9 (B) is an SEM image showing a result when the aging time of the reaction solution was seven days. According to FIG.9 (A) and (B), the lengths of the silica nanoparticle structural components 2 gradually extended as the aging time elapsed. Further, as physical property changes of the reaction solution, it was confirmed that the reaction solution became more turbid and the viscosity thereof increased as the aging time elapsed.

### (5-4) Additive Amount of F 127

Next, the verification procedures of the silica nanoparticle structure 1 as shown in FIG.2 were carried out under a condition in which the reaction temperature T at the step SP6 and the step SP8 was 60°C, the pH of the reaction solution at the step SP7 was 7.2, and the aging time at the step SP8 was three days. Further, under such a condition, there were prepared five kinds of reaction solutions whose additive amounts of F127 were based on a ratio SiO2 : F127 = 1 : x in which x was rendered to 0.5, 0.8, 1.2, 1.5 and 2.0, respectively. The silica nanoparticles 3 in each solution were then adhered to the Si substrate 5 via dip coating (step SP9), followed by performing UV-ozone treatment thereon (step SP10). Each Si substrate 5 to which the silica nanoparticles 3 in each reaction solution had been adhered was photographed using the scanning electron microscope (step SP11), followed by verifying a series of SEM images thus obtained.

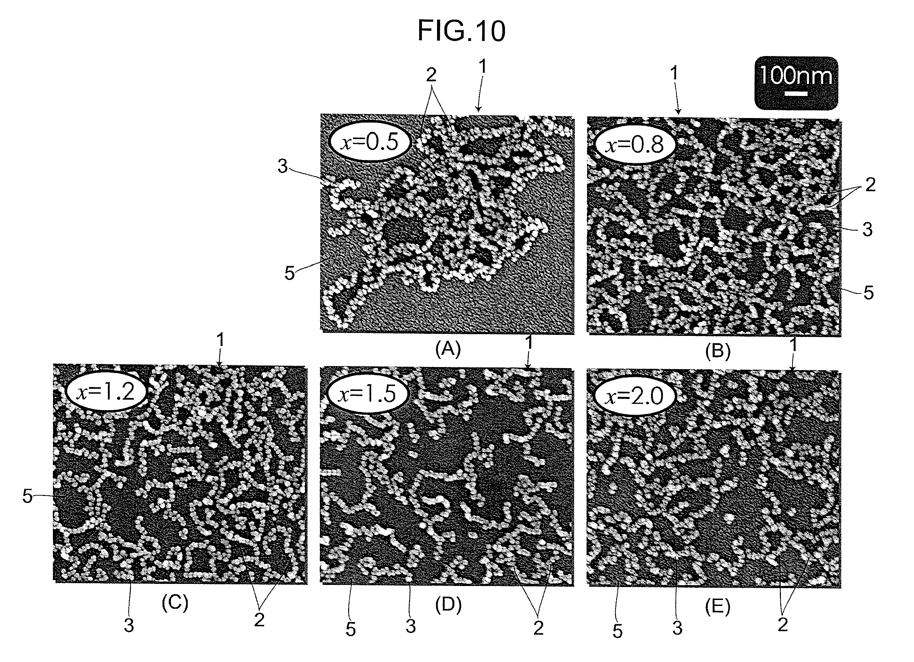

As shown in FIG.10 (A) through (E), it was confirmed that there were prepared the silica nanoparticle structural components 2 in which the silica nanoparticles 3 were ordered one-dimensionally and connected to each other, with each reaction solution whose value for x was 0.5, 0.8, 1.2, 1.5, and 2.0, respectively. Further, white precipitates were obtained in a reaction solution whose value for x was 0.5, during the aging time. However, according to the SEM image shown in FIG.9 (A), such precipitates were due to the silica nanoparticles 3 sophisticatedly formed into a network.

### (6) Connecting Strength of Silica Nanoparticles in Silica Nanoparticle Structure

Next, the verification procedures of the silica nanoparticle structure 1 as shown in FIG.2 were carried out in a manner such that the reaction solution at the step SP8 was subjected to ultrasonic irradiation for 30 minutes, followed by adhering the silica nanoparticles 3 in the reaction solution to the Si substrate 5 via dip coating (step SP9) and performing UV-ozone treatment thereon (step SP10). Subsequently, such Si substrate 5 to which the silica nanoparticles 3 in the reaction solution had been adhered was photographed using the scanning electron microscope (step SP11), followed by verifying a series of SEM images thus obtained.

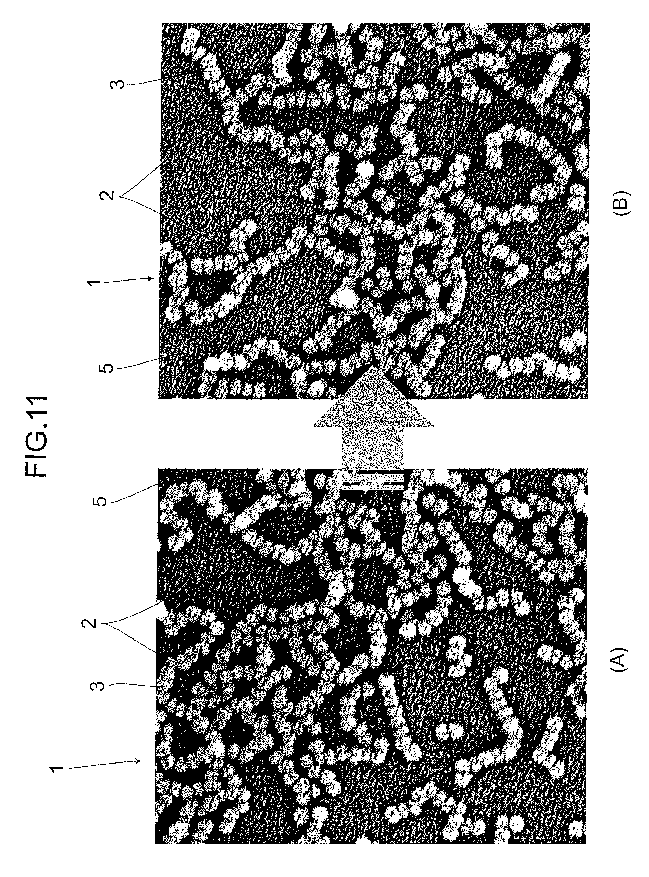

Here, Fig.11 (A) is an SEM image obtained by photographing the Si substrate 5 to which the silica nanoparticles 3 in the reaction solution had been adhered without performing ultrasonic irradiation on the reaction solution in advance, using the scanning electron microscope. On the contrary, FIG.11 (B) is an SEM image obtained by photographing the Si substrate 5 to which the silica nanoparticles 3 in the reaction solution had been adhered after performing ultrasonic irradiation on the reaction solution, using the scanning electron microscope.

As shown in FIG. 11 (A) and (B), it was confirmed that the silica nanoparticles 3 were not dispersed, but still remained ordered one-dimensionally and connected to each other, even after the silica nanoparticle structural components 2 had been subjected to external force such as ultrasonic irradiation or the like. Namely, it was confirmed that the adjacent silica nanoparticles 3 of the silica nanoparticle structural components 2 were connected to each other so tightly that they would not be dispersed even when subjected to external forces.

Next, the verification procedures of the silica nanoparticle structure 1 as shown in FIG.2 were carried out under a condition in which the additive amount of F 127 was based on the ration SiO₂ : F127=1 : 1, the reaction temperature T at the step SP6 and the step SP8 was 60°C, the pH of the reaction solution at the step SP7 was 7, and the aging time at the step SP8 was three days. Further, under such a condition, the reaction solution was stirred at revolution speed of 200 rpm, 500 rpm and 800 rpm, respectively, at the time of aging, followed by adhering the silica nanoparticles 3 in each reaction solution to the Si substrates 5, respectively, via dip coating (step SP9) and performing UV-ozone treatment thereon (step SP10). Each Si substrate 5 to which the silica nanoparticles 3 in each reaction solution had been adhered was photographed using the scanning electron microscope (step SP11), followed by verifying a series of SEM images thus obtained.

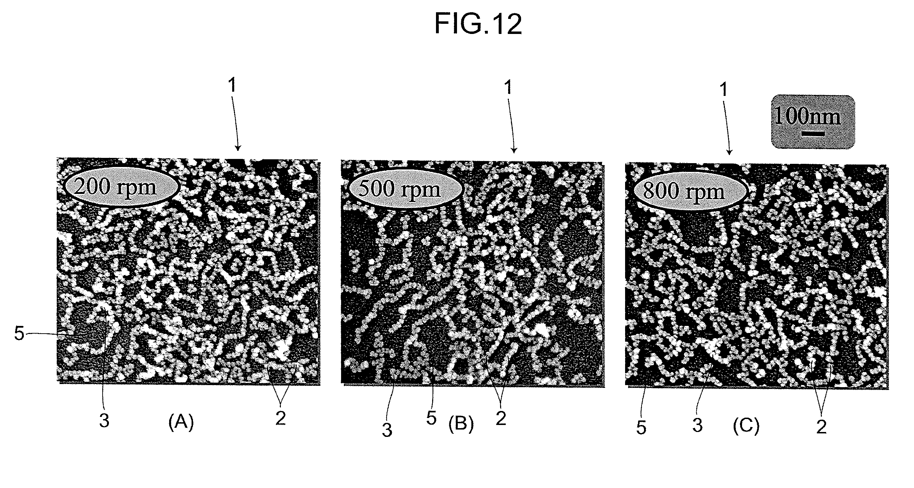

As shown in the SEM images of FIG.12 (A), (B) and (C), it was confirmed that there could be prepared the silica nanoparticle structural components 2 in which the silica nanoparticles 3 were not dispersed but remained ordered one-dimensionally and connected to each other, even after stirring the reaction solution at revolution speed of 200 rpm, 500 rpm and 800 rpm, respectively, at the time of aging.

### (7) Silica Nanoparticle Structure of other Embodiments

### (7-1) Silica Nanoparticle Structure having sSlica Nanoparticles with Large particle Diameters

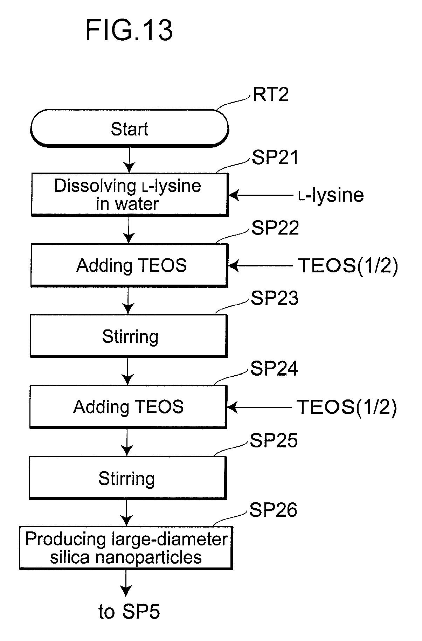

Next, there were prepared silica nanoparticle structural components (referred to as large-diameter silica nanoparticle structural components hereunder) in which silica nanoparticles with a particle diameter of approximately 30nm (referred to as large-diameter silica nanoparticles hereunder) were ordered one-dimensionally and connected to each other, said particle diameter being twice as long as that of the silica nanoparticles of the silica nanoparticle structure 1 of the aforementioned embodiment. FIG.13 is a flow chart showing verification procedures of such silica nanoparticle structure, beginning with a starting step RT 2 and then moving to a step SP21 in which a water solution was prepared by adding lysine ("_{L}-lysine" in FIG.13) acting as a basic amino acid to water (H₂O).

Here, TEOS was added to the water solution at the molar ratio between the raw materials of 1 (TEOS) : 154.4 (H2O) : 0.02 (_{L}-lysine). However, only half the amount of the TEOS ("TEOS (1/2)"in FIG. 13) was added to the water solution in the beginning (step SP22), followed by stirring the solution thus obtained for 24 hours at revolution speed of 500 rpm in a water bath of 60°C. Subsequently, another half of TEOS was further added to the solution thus obtained (step SP24), followed by stirring the solution thus obtained for 24 hours at revolution speed of 500 rpm in a water bath of 60°C, thereby obtaining a colloid solution (step SP25). In this way, large-diameter silica nanoparticles with a particle diameter of approximately 30nm were produced in the colloid solution (step SP26).

Next, there were produced in a reaction solution the large-diameter silica nanoparticle structural components in which the large-diameter silica nanoparticles with a particle diameter of approximately 30nm were ordered one-dimensionally and connected to each other, by carrying out the aforementioned verification procedures in FIG.2 from the step SP5. Subsequently, the large-diameter silica nanoparticles in the reaction solution were adhered to the Si substrates 5 via dip coating (step SP9), followed by performing UV-ozone treatment thereon (step SP10). Such Si substrate 5 was then photographed using the scanning electron microscope (step SP11), followed by verifying an SEM image thus obtained.

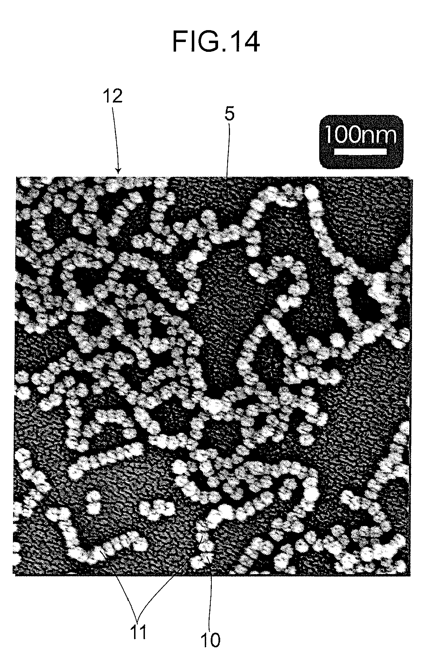

Here, FIG. 14 is an SEM image obtained by photographing the Si substrate 5 to which a silica nanoparticle structure 12 in the reaction solution had been adhered, using the scanning electron microscope. As shown in FIG. 14, it was confirmed that there were produced large-diameter silica nanoparticles 10 with a particle diameter of approximately 30nm, and silica nanoparticle structural components 11 in which the large-diameter silica nanoparticles 10 were ordered one-dimensionally and connected to each other.

### (7-2) Silica Nanoparticle Structure in which Multiple kinds of Silica Nanoparticles with different Particle Diameters coexist with one another and are ordered one-dimensionally.

Next, there were prepared silica nanoparticle structural components in which silica nanoparticles with small particle diameters (referred to as small-diameter silica nanoparticles hereunder) and the large-diameter silica nanoparticles with large particle diameters coexisted with one another and were ordered one-dimensionally and connected to each other.

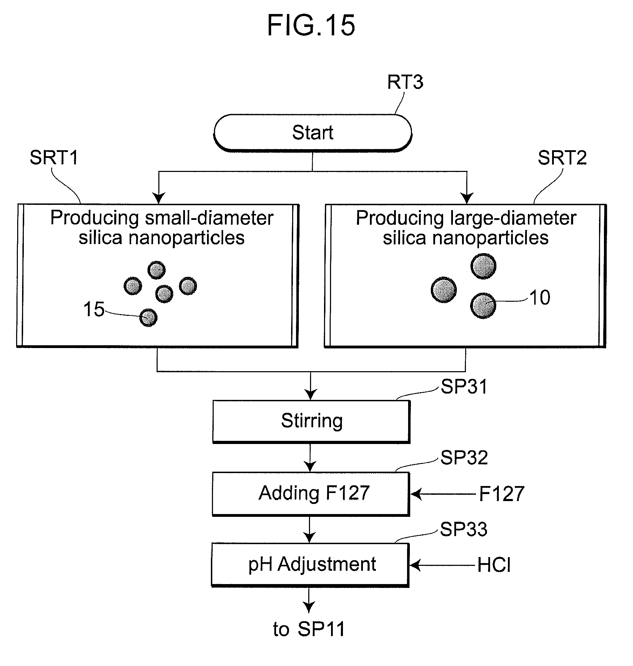

FIG.15 is a flow chart showing verification procedures of such silica nanoparticle structure, beginning with a starting step RT 3 and then moving to a sub-routine SRT1 and a sub-routine SRT2. In the sub-routine SRT1, there were produced in a colloid solution (first solution) small-diameter silica nanoparticles 15 with a particle diameter of approximately 15nm, by carrying out the verification procedures in FIG.2 from the step SP1 to the step SP 4. Meanwhile, there were also produced in a colloid solution (second solution) large-diameter silica nanoparticles 10 with a particle diameter of approximately 30nm, by carrying out the verification procedures in FIG.13 from the step SP21 to the step SP 26 (sub-routine SRT2).

Next, the colloid solution prepared in the sub-routine SRT1 and the colloid solution prepared in the sub-routine SRT2 were mixed with each other and stirred together (step SP31), followed by adding and dissolving F127 therein (step SP32). Subsequently, hydrochloric acid was used to adjust the pH of the reaction solution to 7 (step SP33), followed by photographing a silica nanoparticle structure using the scanning electron microscope, thereby obtaining an SEM image thereof (step SP11 in FIG.2), and thus completing the producing procedures of the silica nanoparticle structure (step SP12).

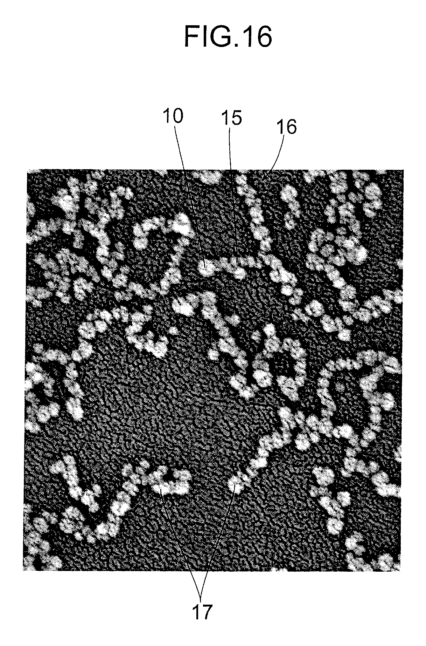

FIG.16 is an SEM image obtained by photographing such silica nanoparticle structure 16, using the scanning electron microscope. As shown in FIG.16, it was confirmed that there were prepared silica nanoparticle structural components 17 in which the small-diameter silica nanoparticles 15 with a particle diameter of approximately 15nm and the large-diameter silica nanoparticles 10 with a particle diameter of approximately 30nm coexisted and were randomly ordered one-dimensionally and connected to each other.

### (7-3) Silica Nanoparticle Structure having multiple kinds of Silica Nanoparticles with different Particle Diameters, in which Silica Nanoparticles with same particle Diameters are ordered one-dimensionally.

Next, there was produced a silica nanoparticle structure in which the small-diameter silica nanoparticle structural components and the large-diameter silica nanoparticle structural components coexisted. Here, the small-diameter silica nanoparticle structural components had structures in which small-diameter silica nanoparticles 15 with small particle diameters were ordered one-dimensionally and connected to each other. And, the large-diameter silica nanoparticle structural components had structures in which the large-diameter silica nanoparticles with particle diameters larger than those of the small-diameter silica nanoparticles were ordered one-dimensionally and connected to each other.

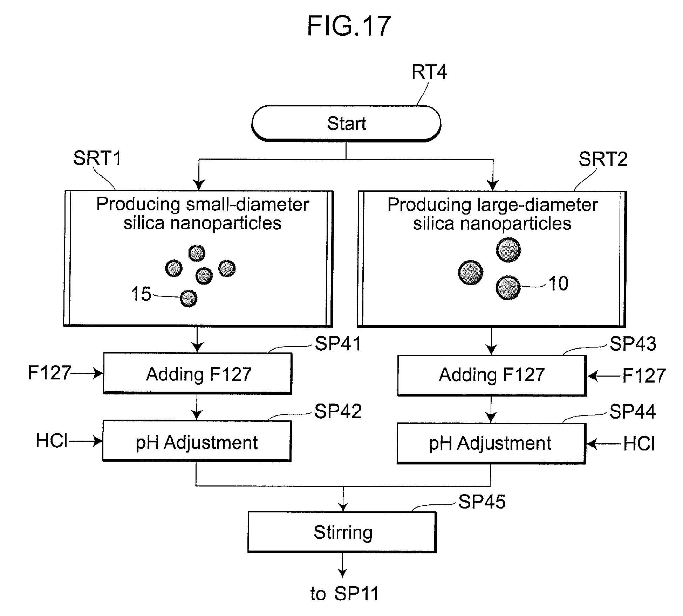

FIG.17 is a flow chart showing verification procedures of such silica nanoparticle structure, beginning with a starting step RT 4 and then moving to a sub-routine SRT1 and a sub-routine SRT2. In the sub-routine SRT1, there were produced in a colloid solution (first solution) small-diameter silica nanoparticles 15 with a particle diameter of approximately 15nm, by carrying out the verification procedures in FIG.2 from the step SP1 to the step SP 4. Meanwhile, there were also produced in a colloid solution (second solution) large-diameter silica nanoparticles 10 with a particle diameter of approximately 30nm, by carrying out the verification procedures in FIG. 13 from the step SP21 to the step SP 26 (sub-routine SRT2).

Subsequently, F127 was added and dissolved in the colloid solution prepared in the sub-routine SRT1 (step SP41), followed by using hydrochloric acid to adjust the pH of the reaction solution to 7, thereby obtaining a first reaction solution (step SP42). Meanwhile, F127 was also added and dissolved in the colloid solution prepared in the sub-routine SRT2 (step SP43), followed by using hydrochloric acid to adjust the pH of the reaction solution to 7, thereby obtaining a second reaction solution (step SP44). The first reaction solution and the second reaction solution were then mixed with each other and stirred together (step SP45), followed by photographing a silica nanoparticle structure using the scanning electron microscope, thereby obtaining an SEM image thereof (step SP11 in FIG.2), and thus completing the verification procedures of the silica nanoparticle structure (step SP12).

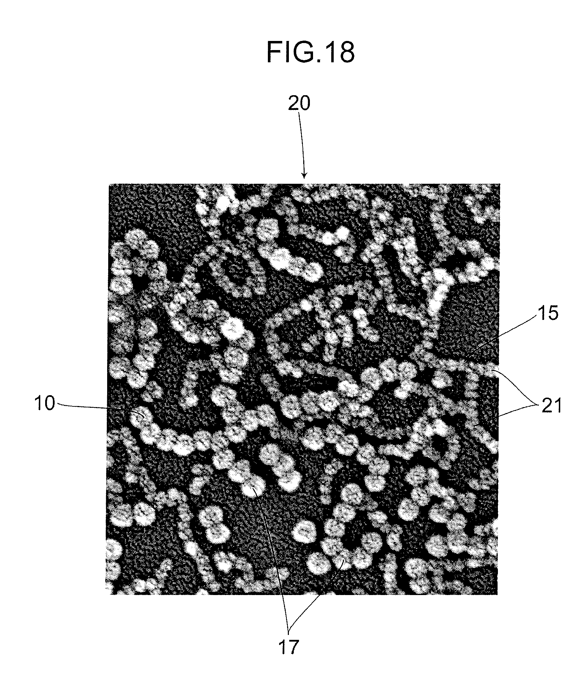

FIG.18 is an SEM image obtained by photographing such silica nanoparticle structure 20, using the scanning electron microscope. As shown in FIG.18, it was confirmed that there were prepared small-diameter silica nanoparticle structural components 21 in which small-diameter silica nanoparticles 15 with a particle diameter of approximately 15nm were ordered one-dimensionally and connected to each other, and large-diameter silica nanoparticle structural components 17 in which large-diameter silica nanoparticles 10 with a particle diameter of approximately 30nm were ordered one-dimensionally and connected to each other. Namely, it was confirmed that there was produced a silica nanoparticle structure 20 in which the small-diameter silica nanoparticle structural components 21 and the large-diameter silica nanoparticle structural components 17 were prepared individually and allowed to coexist with one another.

### (8) Cases in which arginine or Histidine is used as Basic Amino Acid

Next, there was produced a silica nanoparticle structure by carrying out the verification procedures of silica nanoparticle structure in FIG.2, in which, instead of using lysine, arginine was used as basic amino acid. More specifically, a water solution was prepared at the step SP 1 by dissolving arginine acting as basic amino acid in water (H₂O). Further, under such a condition, the pH of the reaction solution was adjusted to 7.2 at the step SP7, followed by carrying out the procedures from the step SP8 to the step SP10. The Si substrate to which the silica nanoparticles in the reaction solution had been adhered was then photographed using the scanning electron microscope (step SP11), followed by verifying an SEM image thus obtained.

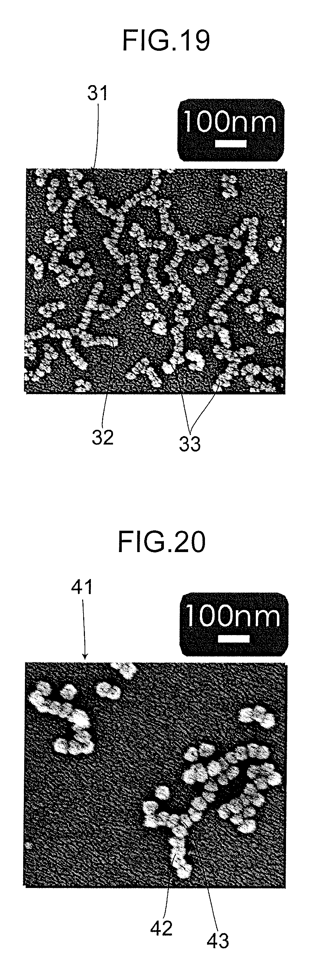

FIG.19 is an SEM image obtained by photographing a silica nanoparticle structure 31 thus produced. As shown in FIG.19, it was confirmed that there could be prepared silica nanoparticle structural components 33 in which silica nanoparticles 32 were ordered one-dimensionally and connected to each other, even when arginine was used as basic amino acid.

Next, there was produced a silica nanoparticle structure by carrying out the verification procedures of silica nanoparticle structure in FIG.2, in which histidine was used as basic amino acid. More specifically, a water solution was prepared at the step SP1 by dissolving histidine acting as basic amino acid in water (H₂O). Further, under such a condition, the pH of the reaction solution was adjusted to 7.2 at the step SP7, followed by carrying out the procedures from the step SP8 to the step SP10. The Si substrate to which the silica nanoparticles in the reaction solution had been adhered was then photographed using the scanning electron microscope (step SP11), followed by verifying an SEM image thus obtained.

FIG.20 is an SEM image obtained by photographing a silica nanoparticle structure 41 thus produced. As shown in FIG.19, it was confirmed there could be prepared silica nanoparticle structural components 43 in which silica nanoparticles 42 were ordered one-dimensionally and connected to each other, even when histidine was used as basic amino acid.

Although an embodiment of the present invention has thus been described, the present invention is not limited to the aforementioned embodiment, and various modified embodiments are possible. For example, the particle diameters of the silica nanoparticles of the aforementioned embodiment do not necessarily have to be 15nm and 30nm. As a matter of fact, there can be prepared first silica nanoparticle structural components and second silica nanoparticle structural components, in which multiple kinds of silica nanoparticles with various particle diameters coexist and are ordered one-dimensionally, or silica nanoparticles having particle diameters other than 15nm and 30nm are used.

Further, according to the aforementioned embodiment, hydrochloric acid was used as a pH adjuster for adjusting pHs. However, the present invention is not limited to such case. As a matter of fact, pH adjusters such as nitric acid, sulfuric acid, acetic acid and the like can be used, as long as the silica nanoparticles can be ordered one-dimensionally and connected to each other by adjusting the pH of the reaction solution.

Furthermore, according to the aforementioned embodiment, there were prepared the silica nanoparticle structural components 2 in which the silica nanoparticles 3 were ordered one-dimensionally and connected to each other. However, the present invention is not limited to such case. As a matter of fact, there can be silica nanoparticle structural components in which a plurality of the silica nanoparticles are simply agglomerated or one-dimensionally connected to each other in various other ways, instead of being ordered (one dimensional order) in straight or curved lines so as to form ball chains.

### (9) Cases in which TEOS is used instead of Block Copolymer

According to the aforementioned embodiment, the block copolymer was used as a one-dimensional structure-forming substance when producing the silica nanoparticle structure 1. However, the silica nanoparticle structure can also be produced by adding TEOS instead of such block copolymer.

### (9-1) Method of Producing Silica Nanoparticle Structure

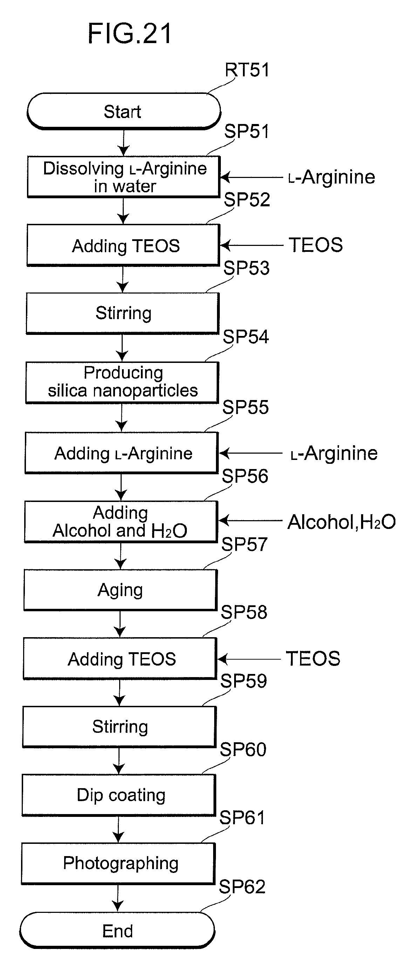

FIG.21 is a flow chart showing producing procedures for producing a silica nanoparticle structure, in which TEOS was added as the one-dimensional structure-forming substance. The producing procedures begin with a starting step RT51 and then moves to a step SP51 in which a water solution was prepared by dissolving 136. 5mg (0.7836mmol) of arginine (_{L}-Arginine) acting as basic amino acid in a deionized water (H₂O) of 103.5g at the temperature of 60°C.

Next, 7.8125g (37.50mmol) of tetraethoxysilane (TEOS) was added to the water solution thus obtained (step SP52), followed by stirring the solution for 24 hours in a water bath of 60°C and at a revolution speed of 500 rpm, thereby obtaining a colloid solution (step SP53). In this way, there were produced silica nanoparticles with a particle diameter of approximately 22nm in the colloid solution (step SP54).

Next, a seed solution of 1.4g was taken out of the colloid solution thus prepared. 0.0518g of arginine was then added to such seed solution (step SP55). After arginine had completely dissolved in the seed solution, 12.8g of ethanol and 3.2g of water were added to the solution (step SP56), thereby obtaining a reaction solution.

Next, the reaction solution was allowed to stand still and aged for one day at ambient temperature (step SP57). Subsequently, 0.4g (2mmol) of tetraethoxysilane (TEOS) was added to the reaction solution (step SP58), followed by stirring the solution for 24 hours in a water bath of 60°C and at a revolution speed of 500 rpm, thereby producing a silica nanoparticle structure which was the target product (step SP59). Here, TEOS was added at the step SP58 instead of the block copolymer used in the aforementioned embodiment.

Next, in order to verify such target product, particles in the solution were adhered to the Si substrate via dip coating (step SP60), followed by performing UV-ozone treatment (ultraviolet wavelength 172 nm, pressure 50 Pa, irradiation time 20 min) thereon so as to remove arginine. Subsequently, the Si substrate to which the silica nanoparticles had been adhered was photographed using the scanning electron microscope, thereby obtaining an SEM image. Further, the aforementioned product was confirmed using a transmission electron microscope (step SP61), thus completing the producing procedures of the silica nanoparticle structure (step SP62). Here, a TEM specimen was prepared by delivering a sample into a microgrid by drops, and then allowing such sample to dry naturally.

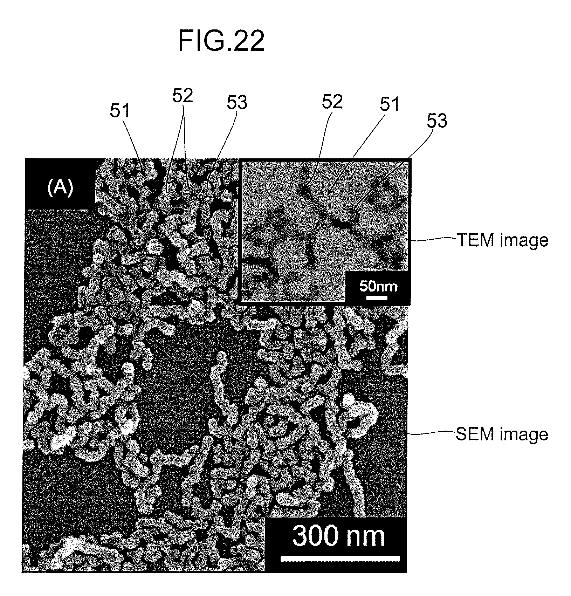

The SEM image and a TEM image thus obtained are shown in FIG.22. As shown in the SEM image of FIG.22, there was confirmed on the Si substrate a silica nanoparticle structure 51 composed of silica nanoparticle structural components 52 which was silica in the shape of a curved rod. Here, the silica nanoparticle structural components 52 had seed particles 53 that were connected to one another, and was a structure body covered by silica produced via hydrolytic polycondensation of TEOS. Also, as shown in FIG.22, same results were confirmed according to the TEM image.

### (9-2) Concentration of Arginine and Ethanol

Next, dependencies on various parameters were verified. Here, various kinds of reaction solutions were prepared by varying the additive amount of arginine added at the step SP55 and the additive amount of ethanol added at the step SP56, respectively. At that time, the rest conditions were as same as those in "(9-1) Method of producing silica nanoparticle structure," and observation was made in the same way using SEM images.

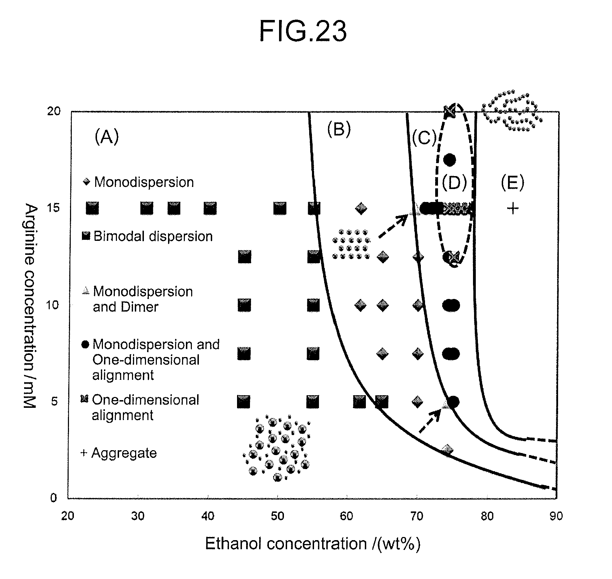

FIG.23 shows how the concentration of arginine and ethanol was interrelated with the shapes of the particles. In a range (A) shown in FIG23, it was confirmed that new particles had been produced due to TEOS added at the step SP58 without using the seed particles as templates. Namely, there existed particles of two sizes in the system, and production of rod-shaped particles was not confirmed. In a range (B), although particle growth due to TEOS added at the step SP58 was confirmed and monodispersed particles were produced, using the seed particles as templates, rod-shaped particles were not confirmed. In a range (C), rod-shaped particles were confirmed in addition to the monodispersed particles confirmed in the range (B). In a range (D), only the rod-shaped particles were confirmed. In a range (E), there were confirmed the rod-shaped particles and an aggregate of the particles.

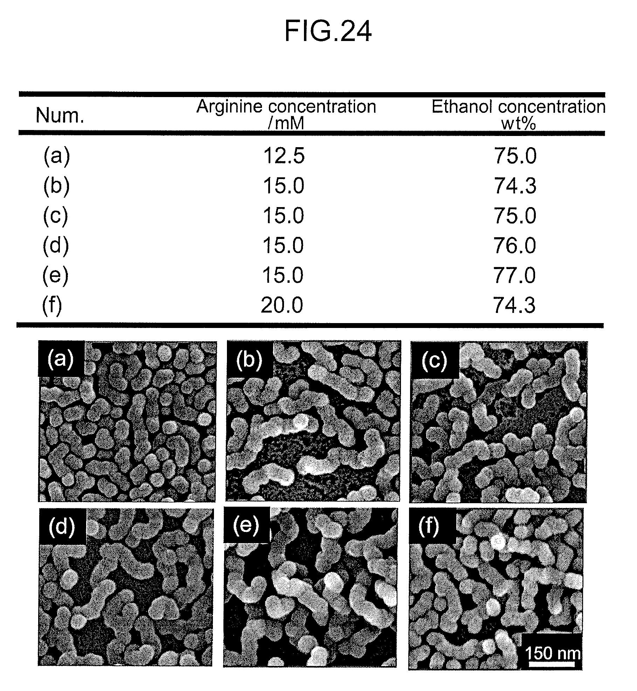

Here, FIG.24 features photographs of some of the typical particles in the range (D) and shows how such typical particles were interrelated with additive concentration condition (i.e., the concentration of arginine and ethanol). FIG.24 (a) is an SEM image photographed under a condition in which the concentration of the arginine was 12.5mM and the concentration of ethanol was 75.0wt%, and there were confirmed the silica nanoparticle structural components 52 which were the rod-shaped particles. Further, as shown in FIG.24 (b) through (f), there were also confirmed the silica nanoparticle structural components 52 which were the rod-shaped particles, even when the concentration of arginine and ethanol was rendered to other values.

### (9-3) Kinds of Alcohol

Next, verification was made on whether or not the silica nanoparticle structural components 52 which were the rod-shaped particles could be produced when the kind of alcohol added at the step SP56 was changed. According to the aforementioned embodiment, ethanol was used as the alcohol added at the step SP56. However, instead of using ethanol, alcohols such as methanol, isopropanol, propanol and tert-butanol were added. Further, it was confirmed that there were prepared the silica nanoparticle structural components 52 which were the rod-shaped particles when the alcohol concentration of each methanol, isopropanol, propanol or tert-butanol was approximately 93%, 74.3%, 65%, 62.5% and 50%.

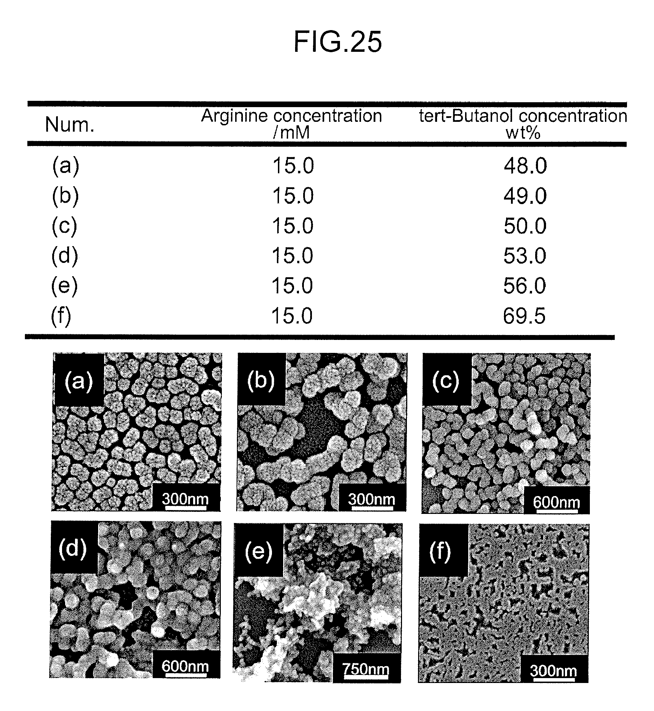

Here, FIG.25 shows some of the typical results when tert-butanol was added. According to FIG.25, the concentration of tert-butanol was varied while the concentration of arginine was set to 15.0mM. Further, SEM images of products obtained under each concentration of tert-butanol were obtained so as to observe the structures thereof. As shown in FIG.25, it was confirmed that there were prepared silica nanoparticle structural components in which the silica nanoparticles were connected to each other one-dimensionally, even when the concentration of tert-butanol was 48%, 49%, 50.0% and 53.0%, respectively. Further, the particles were confirmed to form a three-dimensional aggregate when the concentration of tert-butanol was 56.0% and 69.5%.

However, the concentration of arginine and the concentration of ethanol, the additive amount of TEOS, and the kind of alcohol and the like can be variously changed to others, as long as there can be prepared the silica nanoparticle structural components in which a plurality of silica nanoparticles are connected to each other one-dimensionally.

## Claims

1. A silica nanoparticle structure comprising silica nanoparticle structural components in which a plurality of silica nanoparticles are one-dimensionally coupled together.

2. The silica nanoparticle structure according to claim 1, wherein said silica nanoparticle structural components are prepared by solving one-dimensional structure forming substances with one-dimensional structure forming capability in a solution containing said silica nanoparticles and regulating a pH of said solution using a pH adjuster.

3. The silica nanoparticle structure according to claim 2, wherein said one-dimensional structure forming substance comprises a block copolymer and/or TEOS (tetraethoxysilane).

4. The silica nanoparticle structure according to any one of claims 1 to 3, wherein said silica nanoparticles are comprised of first silica nanoparticles with a given particle diameter and second silica nanoparticles with a particle diameter different from a diameter of said first silica nanoparticles such that said silica nanoparticle structural components are coupled together with said first silica nanoparticles and said second silica nanoparticles being mixed together and one-dimensionally ordered.

5. The silica nanoparticle structure according to any one of claims 1 to 3, wherein said silica nanoparticles are comprised of first silica nanoparticles with a given particle diameter and second silica nanoparticles with a particle diameter different from a diameter of said first silica nanoparticles such that said silica nanoparticle structural components are comprised of first silica nanoparticle structural components in which said first silica nanoparticles are coupled together with said first silica nanoparticles one-dimensionally ordered and second silica nanoparticle structural components in which said second silica nanoparticles are coupled together with said second silica nanoparticles one-dimensionally ordered.

6. A method for producing a silica nanoparticle structure comprising:
a solving step of preparing a reaction solution by solving a one-dimensional structure forming substance with one-dimensional structure forming capability in a solution containing silica nanoparticles, and
a coupling step of one-dimensionally coupling said silica nanoparticles by adding a pH adjuster to said reaction solution to regulate a pH of said reaction solution.

7. The method for producing a silica nanoparticle structure according to claim 6, wherein in said solving step, said one-dimensional structure forming substance comprises a block copolymer or TEOS (tetraethoxysilane).

8. The method for producing a silica nanoparticle structure according to claim 6 or 7, wherein said solution in said solving step is prepared by mixing a first solution containing, as said silica nanoparticles, first silica nanoparticles with a given particle diameter and a second solution containing, as said silica nanoparticles, second silica nanoparticles with a particle diameter different from a diameter of said first silica nanoparticles.

9. The method for producing a silica nanoparticle structure according to claim 6 or 7, wherein
said solution in said solving step is comprised of a first solution containing, as said silica nanoparticles, first silica nanoparticles with a given particle diameter and a second solution containing, as said silica nanoparticles, second silica nanoparticles with a particle diameter different from a diameter of said first silica nanoparticles,
in said solving step, a first reaction solution is prepared by dissolving a block copolymer in said first solution and a second reaction solution is prepared by dissolving a block copolymer in said second solution, and
in said coupling step, said first silica nanoparticles are coupled together with said first silica nanoparticles one-dimensionally ordered, by adding said pH adjuster to said first reaction solution to regulate a pH of said first reaction solution, while said second silica nanoparticles are coupled together with said second silica nanoparticles one-dimensionally ordered, by adding said pH adjuster to said second reaction solution to regulate a pH of said second reaction solution, and
wherein after said coupling step, there is provided a mixing step of mixing first silica nanoparticle structural components in which said first silica nanoparticles are coupled together with said first silica nanoparticles one-dimensionally ordered and second silica nanoparticle structural components in which said second silica nanoparticles are coupled together with said second silica nanoparticles one-dimensionally ordered.

10. The method for producing a silica nanoparticle structure according to any one of claims 6 or 9, wherein in said coupling step, said pH is not less than 4 and below 8.

11. The method for producing a silica nanoparticle structure according to claim 10, wherein said coupling step includes an aging step of aging said reaction solution after regulating said pH of said reaction solution.
